# EUROPÄISCHE PATENTANMELDUNG

(11) **EP 0 659 331 A1**
(43) Veröffentlichungstag der Anmeldung: **28.06.1995**
(21) Anmeldenummer: 94120097.4
(22) Anmeldetag: 19.12.1994
(51) Int. Cl.: A01C 5/06

(54) **Vorrichtung zur Durchführung der Direktsaat**

(30) Priorität: 24.12.1993 DE 4344518; 05.02.1994 DE 4403621
(71) Anmelder: ACCORD Landmaschinen Heinrich Weiste & Co. GmbH, D-59494 Soest (DE)
(72) Erfinder: Weiste, Helmut, D-59494 Soest (DE)
(74) Vertreter: Habbel, Hans-Georg, Dipl.-Ing.

(57) **Zusammenfassung**

Die Erfindung betrifft eine Direktsaatsämaschine mit Saatgutvorratsbehältern, davon abgehenden Saatgutleitungen, die zu Zinkensäscharen (2) führen, deren Scharspitzen nach vorne in Fahrtrichtung gerichtet sind, wobei neben dem Zinkensäschar (2) ein Andruckmittel zum Fixieren einer Bodenauflage (16) z.B. aus Pflanzenmaterial angeordnet ist, das bewegbar ausgebildet ist in Bewegungsrichtung des Zinkensäschars (2), wobei die Relativgeschwindigkeit des Andruckmittels gegenüber der Bodenauflageschicht bzw. der Bodenoberfläche geringer ist als die Relativgeschwindigkeit des Säschares (2) zum Boden.

## Beschreibung

Die Erfindung betrifft eine Vorrichtung zur Durchführung der Direktsaat gemäß dem Oberbegriff des Anspruches 1.

Es hat sich gezeigt, daß die Direktsaat gegenüber der konventionellen Bodenbearbeitung und nachfolgender Einsaat Vorteile bietet, da durch die Direktsaat die günstige Bodenstruktur beibehalten wird, die sich über einen längeren Zeitraum hinweg gebildet hat. Daher hat der Boden bei der Direktsaat eine für den Wasserhaushalt günstige Struktur, wodurch verhindert wird, daß die oberen Bodenbereiche rasch austrocknen oder aber, daß aufgrund der geringen Infiltrationsraten bei bearbeitetem Boden Oberflächenabfluß und dadurch Oberflächenerosion bewirkt wird.

Zudem ist die Direktsaat nicht so kosten- und zeitintensiv wie die herkömmliche Saatbettbereitung.

Während die Direktsaat z. B. in den durch kontinentales Klima geprägten Regionen problemlos durchzuführen ist, da dort die Bodenauflage aus Pflanzenresten u. dgl. nicht so hoch ist, stößt die Direktsaat in den hiesigen Klimabereichen auf Schwierigkeiten. Bei höherer Bodenauflage aus Pflanzenmaterial besteht das Problem, daß z. B. durch ein Scheibenschar diese dicke Pflanzenauflage nicht durchgeschnitten wird, sondern bis auf die Saatgutablagetiefe herabgedrückt wird und so bei feuchter Witterung zu einer zu feuchten Lagerung des Saatgutes führt, und bei zu trockener Witterung ein Austrocknen des Saatgutes bewirkt.

Darüber hinaus kann eine Bodenbedeckungsschicht bei der Direktsaat durch Zinkenschare zum Verstopfen führen, da die Zinkensäschare Stroh und größere Pflanzenreste vor sich anhäufen und sich nicht gut selbständig reinigen, so daß z. B. die Bedienperson dieses angesammelte Material von Hand entfernen muß.

Der Erfindung liegt die Aufgabe zugrunde, eine Vorrichtung für die Direktsaat mit Zinkensäscharen zu schaffen, so daß die Direktsaat kostengünstig und mit einfachen Mitteln ohne zusätzliche Bodenbearbeitung durchzuführen ist und ein Verstopfen des Zinkensäschares durch aufgenommenen Bodenbelag vermieden wird.

Diese der Erfindung zugrundeliegende Aufgabe wird durch die Lehre des kennzeichnenden Teiles des Anspruches 1 gelöst.

Die erfindungsgemäße Vorrichtung geht insbesondere von dem Gedanken aus, daß neben dem Zinkensäschar die Bodenauflageschicht, die z. B. aus Pflanzenresten und Pflanzenrückständen bestehen kann, praktisch kurzzeitig festgehalten wird und daß dadurch diese Bodenauflageschicht durch das Zinkenschar bzw. den Scharhalter leichter zertrennt werden kann, ohne daß sich dieses Bodenauflagematerial am Scharhalter stauen kann und es zu Verstopfungen kommt.

Vorteilhafte Ausgestaltungen der Erfindung sind in den Unteransprüchen erläutert.

Vorteilhafte Ausführungsbeispiele der Erfindung sind nachfolgend in den Zeichnungen verdeutlicht, wobei
- Fig. 1: in einer Seitenansicht zwei Zinkensäschare mit daneben angeordneten Andruckrädern darstellt,
- Fig. 2: ist eine Darstellung der in Fig. 1 gezeigten Anordnung in einer Ansicht von oben,
- Fig. 3: zeigt in einer seitlichen Ansicht eine weitere Ausführungsform zweier Zinkenschare mit daneben angeordneten Andruckrädern,
- Fig. 4: zeigt die Anordnung von Fig. 3 in einer Sicht von oben,
- Fig. 5: zeigt in einer Sicht von oben zwei parallel zum Zinkenschar laufende Andruckräder, die jedoch schräggestellt sind,
- Fig. 6: zeigt in einer seitlichen Darstellung ein Zinkensäschar, ein Andruckrad und ein Reinigungsrad im Bereich des Scharhalters,
- Fig. 7: zeigt in einer Seitendarstellung zwei Schinkenschare mit dazwischen verlaufendem Raupenband und
- Fig. 8: zeigt die Anordnung von Fig. 7 in einer Ansicht von oben.

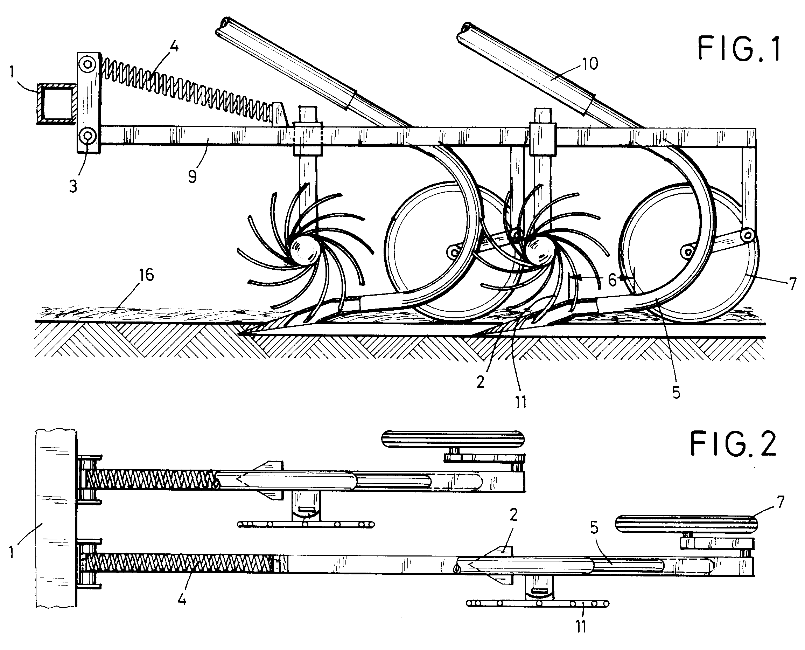

Bezugnehmend auf Fig. 1 ist eine Scharschiene 1 dargestellt, an der über ein Gelenk 3 eine Führung 9 angeordnet ist, die einen Scharhalter 5 trägt, der an seinem der Scharschiene 1 abgewandten Ende ein Säschar 2 trägt. Über eine einstellbare Feder 4 kann die Scharbelastung eingestellt werden.

Das Säschar 2 ist in seinem vorderen Bereich spitzwinklig ausgeführt und dringt daher in relativ flachem Winkel in den Boden ein. Über eine Saatgutzuleitung 10 wird das Saatgut in den durch das Säschar 2 geöffneten Boden eingeleitet. Das Stützrad 7 stützt die gezeigte Anordnung ab und bewirkt eine gleichmäßige Saattiefe.

An der Führung 9 ist ebenfalls ein Festhalterad 11 angeordnet, das in diesem Ausführungsbeispiel als Zinkenrad ausgebildet ist, das jedoch auch ein anderes Rad sein kann. Das Festhalterad 11 wird aufgrund des Gewichtes der Führung 9 und aufgrund der Federkraft der Feder 4 gegen die Bodenoberfläche bzw. eine darauf angeordnete Bodenauflageschicht 16, wie z. B. Pflanzenrückstände, Stroh u. dgl. gedrückt und dieses Festhalterad 11 bewirkt, daß diese Pflanzenrückstände, die sich auf der Bodenoberfläche befinden, praktisch kurzzeitig festgehalten werden, wenn das Festhalterad 11 über diese Pflanzenrückstände hinüberrollt. Durch dieses Niederdrücken und Festhalten der Bodenauflageschicht 16 wird erreicht, daß das Zinkenschar 2 diese Pflanzendecke leichter zertrennen kann und es nicht dazu kommt, daß die Pflanzenrückstände von dem Zinkenschar 2 und dem Scharhalter 5 aufgenommen werden und sich am hinteren Ende des Scharhalters 5 anstauen und zu Verstopfungen führen.

Besonders vorteilhaft ist es, wenn das Festhalterad 11 aus elastischem Material hergestellt ist oder aufgrund der Radform selbst elastisch ausgebildet ist, wie es beim dargestellten Zinkenrad der Fall ist. Dieses Zinkenrad besteht aus flexiblen Zinken, und durch diese Flexibilität des verwendeten Festhalterades 11 werden mögliche Verstopfungen an diesem Festhalterad 11 verhindert, wenn z. B. das Rad über plötzlich auftretende größere Haufen von Pflanzenresten rollt. Durch das mögliche elastische Ausweichen des verwendeten Zinkenrades wird erreicht, daß die Sternradzinken elastisch ausweichen können und sich dadurch weiterdrehen bzw. auf der Bodenoberfläche abrollen, ohne daß Verstopfungen im Bereich des Festhalterades 11 auftreten.

Das Abrollen des Festhalterades 11 wird zusätzlich dadurch begünstigt, daß die Zinken dieses Festhalterades, die z. B. aus 8 mm dünnen Federstahlzinken bestehen können, durch die Pflanzendecke durchstechen und sich mit ihrer Spitze etwas im Boden verzahnen, abrollen und dadurch die Pflanzendecke festhalten, während relativ zum Boden und der festgehaltenen, d. h. aufgespießten Pflanzendecke das Zinkenschar 2 weiter nach vorne gleitet.

Aus Fig. 2 wird deutlich, daß mehrere Führungen 9 nebeneinander angeordnet sein können, die jeweils beispielsweise einen Scharhalter 5, ein Stützrad 7 und ein Festhalterad 11 aufweisen können. Durch mehrere nebeneinander verlaufende Festhalteräder 11 wird die Fixierung der Pflanzenauflageschicht auf dem Boden über einen größeren Bereich ermöglicht.

Der Scharhalter 5 ist über einen Bereich 6 parallel bzw. von vorne nach hinten leicht ansteigend zur Bodenoberfläche geführt und führt dann bogenförmig nach oben. Durch diese parallele bzw. leicht von vorne nach hinten ansteigende Ausbildung des Scharhalters 5 wird die Gefahr von Verstopfungen im Bereich des Scharhalters 5 durch die aufgenommene Bodenauflage 16 reduziert. Im gezeigten Ausführungsbeispiel befindet sich der Bereich 6 des Scharhalters 5 eine Hand breit über dem Boden, jedoch kann selbstverständlich dieser Abstand je nach den Bedingungen verändert werden.

Wenn die in Fig. 1 gezeigte Anordnung über den Boden gezogen wird, dringen die Säschare 2 in den vorher bearbeiteten Boden ein und es wird das Saatgut in der entsprechenden Tiefe abgelegt. Die Bodenauflage 16 wird vor allem im Bereich der Festhalteräder 11 niedergedrückt, so daß das Säschar 2 diese Bodenauflage 16 leicht durchtrennen kann und die von dem Scharhalter 5 aufgenommene Menge an Bodenauflage ist entsprechend gering bzw. es wird überhaupt kein Bodenauflagematerial aufgenommen. Falls Material durch den Scharhalter 5 aufgenommen wird, so wird dieses Material bei einer Fortbewegung der in Fig. 1 dargestellten Anordnung von dem Scharhalter 5 durchtrennt und sackt wieder auf die Bodenoberfläche ab. Die Durchtrennung der Bodenauflage 16 und Scharhalter 5 wird durch eine messerartige Ausbildung der Vorderseite des Scharhalters 5 begünstigt.

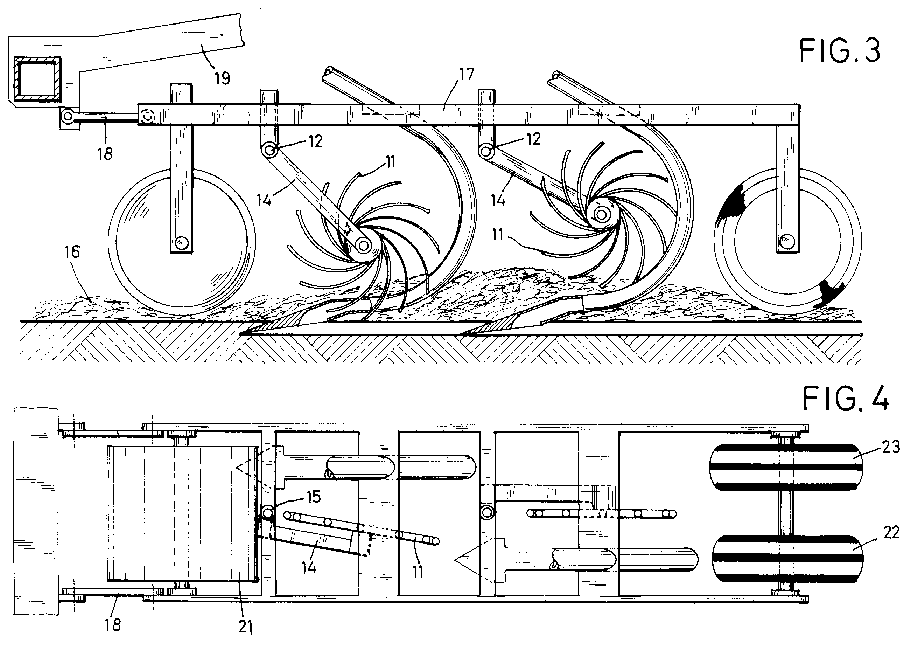

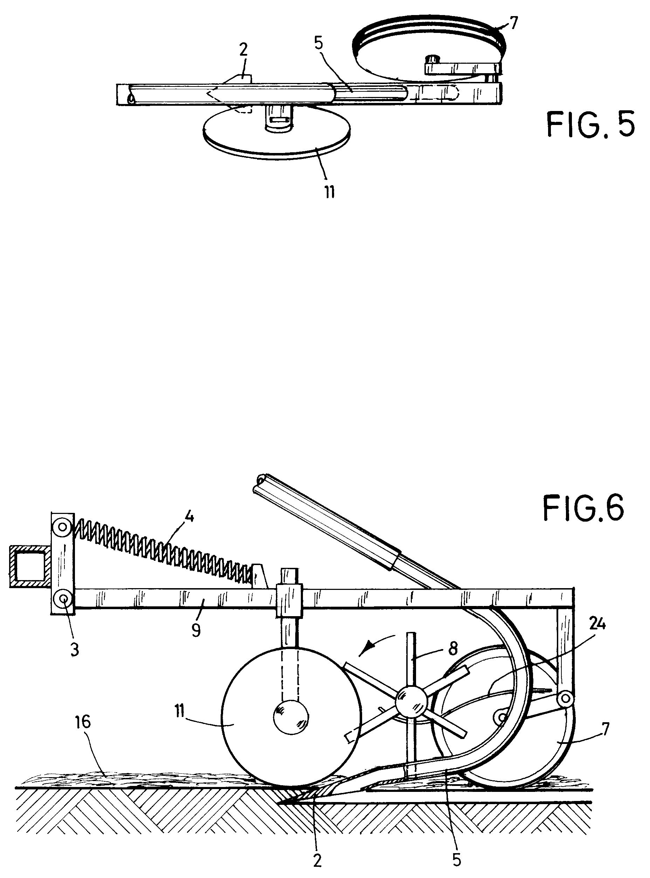

Um ein besonders gutes Ausweichen der Festhalteräder 11 zu ermöglichen, wenn diese Festhalteräder 11 z. B. über einen größeren Strohhaufen rollen, ist es vorteilhaft, die Festhalteräder 11 derart anzuordnen, daß sie nach oben federnd ausgebildet sind, d. h. daß sie nach oben ausweichen können, falls sie über eine Bodenunebenheit bzw. über eine etwas größere Ansammlung von Pflanzenrückständen auf der Bodenoberfläche rollen. Diese federnd ausgebildeten Festhalteräder 11 sind in den Fig. 3 und 4 dargestellt, wobei die Festhalteräder 11 an einer Schwinge 14 angeordnet sind, die über ein Drehgelenk 12 in der Vertikalen bewegbar ist, um diese Ausweichbewegungen durchführen zu können.

In Fig. 3 ist das linke Festhalterad 11 in einer unteren Position dargestellt und das rechte Festhalterad 11 ist in einer angehobenen Stellung dargestellt, da es einem größeren Pflanzenmaterialhaufen ausweicht und derart ein Verstopfen und ein Versperren des Festhalterades 11 verhindert.

Wie aus Fig. 4 ersichtlich ist, sind neben vertikalen Bewegungen der Festhalteräder 11 auch Schwenkbewegungen um eine Achse 15 möglich.

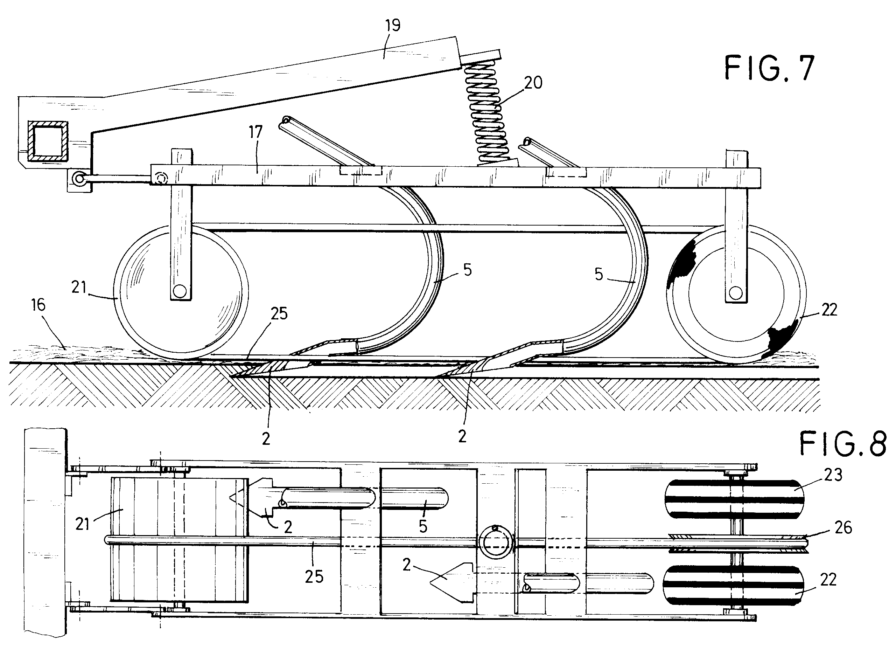

Die hier dargestellten Festhalteräder 11 sind an einem Gestell 17 angeordnet, das mit der Scharschiene 1 über eine Verbindungsschwinge 18 gelenkig verbunden ist. Das Gestell 17 wird über einen nur im Ansatz dargestellten Kragarm 19 mittels einer nicht dargestellten Feder auf den Boden gedrückt, wodurch die Festhalteräder 11 die nötige Belastung erhalten, um ein Festhalten der Bodenauflageschicht 16 zu erreichen. Das Gestell 17 bewegt sich auf einer vorderen Stützrolle 21 und hinteren Stützrollen 22 und 23. Eine ähnliche Anordnung vom Gestell 17, Kragarm 19 und einer Feder ist in Fig. 7 dargestellt.

Bezugnehmend auf Fig. 5 wird verdeutlicht, daß das Festhalterad 11 in seiner vertikalen Ausrichtung schräggestellt sein kann, wobei diese Schrägstellung der Festhalteräder 11 einstellbar ist auf die Verhältnisse des jeweiligen Bodens und der jeweiligen Bodenauflage 16. Wenn beispielsweise die Bodenauflage 16 aus großen Pflanzenrückständen besteht, ist es vorteilhaft, die Räder mit ihrer Auflagefläche weiter nach außen zu stellen, um einen noch größeren Bereich der Pflanzenauflage 16 durch die Festhalteräder 11 zu fixieren und dadurch ein Durchtrennen der Auflage 16 durch den Scharhalter 5 zu ermöglichen, d. h. das in Fig. 5 nach innen eingestellte Festhalterad kann - falls gewünscht wird - ebenfalls nach außen gekippt werden.

Das Kippen des Festhalterades 11, wie es in Fig. 5 dargestellt ist, bewirkt auch, daß der Abstand bzw. Freiraum zwischen der Radaufhängung und dem Scharhalter 5 relativ groß ist, um ein Verstopfen mit Bodenauflage zu verhindern; gleichzeitig befindet sich jedoch die Auflagefläche des Festhalterades 11 in unmittelbarer Nähe des Säschares 2.

Aus Fig. 5 wird ebenfalls deutlich, daß das Stützrad 7 ebenfalls in seiner vertikalen Neigung einstellbar ist, um auch durch das Stützrad 7 eine Fixierung der Pflanzendecke zu erreichen. Selbstverständlich kann auch das Stützrad 7 wie das Festhalterad 11 in beiden Richtungen geneigt sein, um eine entsprechende Einstellung auf die jeweiligen Verhältnisse zu erreichen.

Bezugnehmend auf Fig. 6 ist eine Abwandlung der Anordnung dargestellt, die bereits aus Fig. 1 bekannt ist und in Fig. 6 ist ein Festhalterad 11 dargestellt, das nicht aus flexiblen Zinken gebildet wird, sondern vollflächig ausgebildet ist. Es ist vorteilhaft, dieses Festhalterad 11 aus elastischem Material herzustellen, so daß durch die Materialelastizität eine Verformbarkeit des Festhalterades 11 gegeben ist, um so ein Verstopfen bzw. Sperren des Festhalterades 11 bei größeren Pflanzenrückstandsansammlungen zu verhindern.

In Fig. 6 ist darüber hinaus schematisch ein Reinigungsrad 8 dargestellt, wobei das Reinigungsrad 8 hinter dem Säschar 2 angeordnet ist und sich in der durch den Pfeil angedeuteten Richtung dreht. Dieses Reinigungsrad 8 schleudert die angehobene Bodenauflage 16 hinter das Säschar 2, und eine Leitvorrichtung 24, die schematisch angedeutet ist, verhindert ein zu weites bzw. zu hohes Schleudern des angehobenen Materials und verhindert so die Unfallgefahr. Das Reinigungsrad 8 kann zusammen mit dem Stützrad 7 angetrieben werden, beispielsweise über eine aus Übersichtlichkeitsgründen nicht dargestellte Gelenkwelle. Es ist jedoch auch möglich, das Reinigungsrad 8 über ein Getriebe oder über einen Fremdantrieb schneller anzutreiben als das Laufrad 7, um eine höhere Reinigungsleistung zu erreichen. Die Umfangsgeschwindigkeit des Reinigungsrades 8 kann also derart eingestellt werden, daß sie gleich oder höher als die des Stützrades 7 ist, um eine intensive Entfernung der von dem Scharhalter 5 aufgenommenen Bodenauflageschicht zu ermöglichen. Der Antrieb des Reinigungsrades 8 ist nicht auf die in der Beschreibung genannten Möglichkeiten beschränkt. Durch eine stufenlose Veränderung der Drehgeschwindigkeit des Reinigungsrades 8 ist es möglich, die Umfangsgeschwindigkeit des Reinigungsrades 8 genau an die jeweiligen Verhältnisse der Bodenauflageschicht und der Witterung anzupassen.

Bezugnehmend auf Fig. 7 sind wiederum Scharhalter 5 mit Scharen 2 dargestellt und das Gestell 17 wird von Stützrollen 21, 22 und 23 getragen. Das Gestell 17 wird über die Feder 20, die an einem Kragarm 19 angeordnet ist, heruntergedrückt.

In diesem Ausführungsbeispiel werden zum Niederdrücken und Niederhalten der Bodenauflageschicht 16 im Bereich der Säschare 2 keine Festhalteräder 11 verwendet, sondern ein Raupenband 25, das in diesem Ausführungsbeispiel über die Stützrolle 21 und eine hintere Riemenscheibe 26 geführt wird. Da es sich bei dieser Darstellung lediglich um ein schematisches Ausführungsbeispiel handelt, sind weitere Führungsmöglichkeiten des Raupenbandes 25 möglich und liegen im Bereich dieser Erfindung. Das Raupenband 25 dreht sich mit der Drehbewegung der als Umlenkrollen dienenden Stützrolle 21 und Riemenscheibe 26, und der wesentliche Vorteil des verwendeten Raupenbandes 25 gegenüber den Festhalterädern 11 ist, daß durch das Raupenband 25 die Bodenauflageschicht 16 über einen sehr großen Bereich niedergedrückt und daher fixiert wird. Über die ganze Länge des Raupenbandes 25 findet diese Fixierung statt und querliegende, längere Strohhalme oder Maisstroh rutscht nun einseitig an den Zinkenscharen 2 vorbei bzw. richtet sich parallel zur Säfurche aus.

Fig. 8 zeigt die schematische Darstellung von Fig. 7 in einer Draufsicht. Es wird deutlich, daß mit nur einem Raupenband die Bodenauflageschicht 16 im Bereich mehrerer Säschare 2 an der Bodenoberfläche fixiert werden kann und daher erspart man sich durch die Verwendung eines Raupenbandes 25 mehrere Festhalteräder 11.

Das Raupenband 25 kann mit Nägeln versehen sein, die an der Auflagefläche des Raupenbandes 25 hervortreten und eine besonders gute Fixierung der Pflanzenauflageschicht auf dem Boden ermöglichen.

Das Raupenband 25 und die Festhalteräder 11 können angetrieben sein und die Drehgeschwindigkeit kann wählbar sein. So ist es möglich, diese Andruckelemente derart anzutreiben, daß ihre Geschwindigkeit der Bewegungsgeschwindigkeit der Säschare 2 entspricht; es ist auch möglich, deren Geschwindigkeit etwas höher einzustellen, so daß die Bodenauflage 16 sowohl auf den Boden gepreßt wird und zusätzlich leicht vom Säschar 2 nach hinten gezogen wird.

Damit die Andruckelemente eine Fixierung der Bodenauflageschicht 16 ermöglichen, wird die Geschwindigkeit dieser Andruckelemente häufig so eingestellt, daß deren Relativgeschwindigkeit zum Boden bzw. zur Bodenauflageschicht 16 Null ist. Bei dieser Relativgeschwindigkeit wird eine Fixierung der Bodenauflageschicht 16 ohne jeglichen Schlupf des Andruckmittels erreicht. Variationen der oben bezeichneten Relativgeschwindigkeit werden möglich, sowohl eine Verringerung als auch eine Erhöhung der Relativgeschwindigkeit.

## Patentansprüche

1. Direktsaatsämaschine mit wenigstens einem in den Boden einführbaren Zinkensäschar, dessen Scharspitze nach vorne in Arbeitsrichtung gerichtet ist, dadurch gekennzeichnet, daß neben dem Zinkensäschar (2) ein Andruckmittel zum Fixieren einer Bodenauflage (16) z. B. aus Pflanzenmaterial angeordnet ist, das beweglich ausgebildet ist in Arbeitsrichtung des Zinkensäschars (2), wobei die Relativgeschwindigkeit des Andruckmittels gegenüber der Bodenauflageschicht (16) bzw. der Bodenoberfläche geringer ist als die Relativgeschwindigkeit des Säschares (2) zum Boden.

2. Direktsaatsämaschine gemäß Anspruch 1, dadurch gekennzeichnet, daß das Andruckelement ein Festhalterad (11) ist.

3. Direktsaatsämaschine gemäß Anspruch 1, dadurch gekennzeichnet, daß das Andruckelement ein Raupenband (25) ist.

4. Direktsaatsämaschine gemäß einem der vorhergehenden Ansprüche, gekennzeichnet durch ein Zinkensäschar (2), dessen Scharhalter (5) in einem Bereich zwischen Scharspitze und dem Anschluß an die Sämaschine parallel zur Bodenoberfläche bzw. von der Scharspitze in flachem Winkel ansteigend ausgebildet ist.

5. Direktsaatsämaschine gemäß einem der vorhergehenden Ansprüche, dadurch gekennzeichnet, daß der Scharhalter (5) an seiner Vorderseite messerartig ausgebildet ist.

6. Direktsaatsämschine gemäß einem der vorhergehenden Ansprüche, dadurch gekennzeichnet, daß an beiden Seiten des Säschares (2) Festhalteräder (11) angeordnet sind.

7. Direktsaatsämaschine gemäß einem der vorhergehenden Ansprüche, dadurch gekennzeichnet, daß eines oder beide Festhalteräder (11) schräg zum Säschar (2) angeordnet sind.

8. Direktsaatsämaschine gemäß einem der vorhergehenden Ansprüche, dadurch gekennzeichnet, daß ein Reinigungsrad (8) hinter dem Säschar (2) im Bereich des Scharhalters (5) angeordnet ist.

9. Direktsaatsämaschine gemäß einem der vorhergehenden Ansprüche, dadurch gekennzeichnet, daß die Festhalteräder (11) elastisch ausgebildet sind, d. h. aus elastischem Material oder aus flexiblen Zinken bestehen.

10. Direktsaatsämaschine gemäß einem der vorhergehenden Ansprüche, dadurch gekennzeichnet, daß das Raupenband (25) an seiner Auflagefläche nagelartige Erhebungen aufweist.

11. Direktsaatsämaschine gemäß einem der vorhergehenden Ansprüche, dadurch gekennzeichnet, daß das Festhalterad (11) vertikal und/oder horizontal beweglich aufgehängt ist.
